# DEMANDE DE BREVET EUROPEEN

(11) **EP 4 099 249 A1**
(43) Date de publication de la demande: **07.12.2022**
(21) Numéro de dépôt: 22174766.0
(22) Date de dépôt: 23.05.2022
(51) Int. Cl.: G06Q 20/20, G06Q 20/04

(54) **PROCÉDÉ ET DISPOSITIF DE TRANSMISSION D'UN IDENTIFIANT D'UN UTILISATEUR LORS D'UN PAIEMENT ÉLECTRONIQUE RÉALISÉPAR L UTILISATEUR**

(30) Priorité: 01.06.2021 FR 2105770
(71) Demandeur: Orange S.A., 92130 Issy-les-Moulineaux (FR)
(72) Inventeur: LE HUEROU, Emmanuel, 92326 CHATILLON (FR); TOUTAIN, François, 92326 CHATILLON (FR); PONTIGGIA, Michael, 92326 CHATILLON (FR)

(57) **Abrégé**

L'invention concerne un procédé de transmission, lors d'un paiement électronique réalisé par au moins un utilisateur, d'au moins un second identifiant dudit au moins un utilisateur, ledit procédé étant mis en œuvre par un dispositif de transmission et caractérisé en ce qu'il comprend :
- une étape d'obtention d'au moins un premier identifiant dudit au moins un utilisateur depuis au moins un moyen de paiement électronique dudit au moins un utilisateur, ledit au moins un premier identifiant étant utilisé pour ledit paiement électronique ;
- une étape de génération dudit au moins un second identifiant dudit utilisateur, ledit second identifiant comprenant au moins une donnée et une partie dudit au moins un premier identifiant ;
et lorsque ledit paiement électronique est finalisé
- une étape de transmission dudit au moins un second identifiant à destination d'un dispositif de gestion d'au moins une preuve d'achat électronique.

## Description

### 1. Domaine de l'invention

L'invention appartient au domaine des télécommunications et concerne en particulier un système de transmission d'une preuve d'achat.

### 2. Art Antérieur

Chaque dépense chez un marchand est accompagnée d'une preuve d'achat, comme par exemple un ticket de caisse, une facture, une garantie ou toute autre forme de reçu. Prochainement imposée par la loi Française pour de faibles montants, la disparition du ticket papier précipite l'avènement du ticket digital.

Différentes solutions de dématérialisation de ticket de caisse s'appuyant sur des technologies de communication numérique sont d'ores et déjà disponibles. Par exemple, de plus en plus de commerces proposent à leurs clients des tickets de caisse dématérialisés accessibles via leur compte client ou envoyés par courriel après le passage en caisse. De tels systèmes sont souvent liés à une carte de fidélité permettant d'identifier rapidement le client afin de lui transmettre la preuve d'achat.

Concrètement, une fois le scan de la carte de fidélité du client réalisé par le système de caisse puis le paiement effectué, le ticket de caisse associé à la transaction est transmis par le système de caisse à un serveur. Le ticket de caisse est ensuite réceptionné par le serveur qui le traite (ajout de points sur une cagnotte, création de bons de réduction, etc.) puis l'envoie à destination du client.

Lorsque le client n'est pas connu du marchand (s'il n'a pas de compte de fidélité), le commerçant n'a d'autre choix que de demander au client ses coordonnées numériques (adresse de courriel, identifiant d'un réseau social, etc.).

Afin d'éviter cette opération peu ergonomique et coûteuse en temps, il pourrait être intéressant d'utiliser les données de la transaction bancaire, en particulier dans le cas d'un paiement par carte bancaire, et ainsi automatiser l'envoi du ticket digital au client. En effet, chaque carte bancaire comprend au moins un PAN (pour Primary Account Number en anglais) de 16 ou 19 chiffres qui permet d'identifier le client via le compte bancaire auquel la carte bancaire est associée. Ce PAN est lu par le terminal de paiement électronique (TPE) lors la transaction (i.e. le paiement). Cependant les règles de sécurité en vigueur interdisent la transmission de ce numéro au-delà du TPE (hormis à un serveur bancaire), en particulier à la caisse du commerçant lorsque le TPE et la caisse sont connectés ensemble. Au mieux, un numéro partiel ou un jeton peut être transmis.

### 3. Exposé de l'invention

L'invention vient améliorer l'état de la technique et propose à cet effet un procédé de transmission, lors d'un paiement électronique réalisé par au moins un utilisateur, d'au moins un second identifiant dudit au moins un utilisateur, ledit procédé étant mis en œuvre par un dispositif de transmission et caractérisé en ce qu'il comprend :
- une étape d'obtention d'au moins un premier identifiant dudit au moins un utilisateur depuis au moins un moyen de paiement électronique dudit au moins un utilisateur, ledit au moins un premier identifiant étant utilisé pour ledit paiement électronique ;
- une étape de génération dudit au moins un second identifiant dudit utilisateur, ledit second identifiant comprenant au moins une donnée et une partie dudit au moins un premier identifiant ;
et lorsque ledit paiement électronique est finalisé
- une étape de transmission dudit au moins un second identifiant à destination d'un dispositif de gestion d'au moins une preuve d'achat électronique.

Avantageusement, ce procédé permet la fourniture d'un identifiant (second identifiant) d'un utilisateur à un dispositif de gestion de preuves d'achat tel qu'un serveur d'applications ou un système de caisse d'un commerçant lorsque l'utilisateur finalise un paiement. Concrètement, lorsqu'un utilisateur réalise un paiement chez un marchand, le procédé de transmission récupère un identifiant de l'utilisateur utilisé pour le paiement comme par exemple le PAN de la carte bancaire. Le procédé génère ensuite un nouvel identifiant à partir de l'identifiant obtenu. L'identifiant généré comprend au moins une donnée permettant d'identifier l'utilisateur et une partie de l'identifiant obtenu.

Lorsque l'identifiant obtenu est le PAN d'une carte bancaire, la partie de l'identifiant peut correspondre aux huit premiers chiffres du PAN qui déterminent la banque émettrice de la carte bancaire. Une fois le paiement terminé le procédé transmet l'identifiant généré à un dispositif de gestion de preuves d'achat électroniques.

Ainsi, l'identifiant initial (identifiant obtenu) de l'utilisateur qui a permis le paiement n'est pas divulgué auprès du dispositif de gestion de preuves d'achat électroniques et les règles de sécurité sont respectées. Pour rappel, lorsqu'il s'agit du PAN d'une carte bancaire, les règles de sécurité en vigueur interdisent sa transmission par le TPE à un équipement non bancaire.

On entend par identifiant utilisé pour un paiement électronique, un identifiant qui permet de réaliser le paiement (impliqué dans le paiement). Concrètement sans l'identifiant, le paiement ne peut pas se faire.

On entend par identifiant une suite de caractères qui sert à identifier un utilisateur lors d'un paiement. L'identifiant peut être un numéro de carte bancaire (PAN), un numéro de compte, une adresse de messagerie, un numéro de téléphone, etc.

On entend par preuve d'achat tout document relatif à une transaction, comme par exemple un ticket de caisse, un bon de garantie, un coupon de réduction ou tout autre reçu.

On entend par moyen de paiement électronique, l'ensemble des moyens de paiement qui permettent de réaliser une transaction financière entre plusieurs parties tels qu'une carte bancaire, un code barre, un numéro de carte bancaire virtuel, une carte SIM, un numéro de compte, un adresse de messagerie, etc.

On entend par empreinte numérique le résultat de l'application d'une fonction cryptographique telle qu'une fonction de hachage.

Selon un mode de mise en œuvre particulier de l'invention, un procédé tel que décrit ci-dessus est caractérisé en ce que ladite au moins une donnée comprend au moins une empreinte numérique dudit au moins un premier identifiant.

Ce mode de mise en œuvre de l'invention permet, par exemple, à l'identifiant généré, de comprendre une empreinte numérique réalisée via l'application d'une fonction cryptographique sur l'identifiant obtenu, l'empreinte numérique permettant d'identifier l'utilisateur.

A noter que l'empreinte numérique (signature numérique) peut être réalisée sur tout ou partie de l'identifiant obtenu.

Selon un mode de mise en œuvre particulier de l'invention, un procédé tel que décrit ci-dessus est caractérisé en ce que ladite au moins une donnée comprend un troisième identifiant obtenu depuis un serveur bancaire.

Ce mode de mise en œuvre de l'invention permet, par exemple, à l'identifiant généré, de comprendre un identifiant éphémère de l'utilisateur (à usage unique) obtenu depuis un serveur bancaire. Ce mode de mise œuvre implique que le dispositif de transmission, par exemple un TPE, soit connecté à un serveur bancaire distant. Cette connexion est par exemple requise lors d'une autorisation bancaire préalable au paiement ou lors de la mise en œuvre d'une procédure de sécurisation de type 3DSecure (demande d'une authentification complémentaire de l'utilisateur)

Selon un mode de mise en œuvre particulier de l'invention, un procédé tel que décrit ci-dessus est caractérisé en ce que ladite au moins une donnée comprend un troisième identifiant obtenu depuis un serveur bancaire et une empreinte numérique dudit au moins un premier identifiant.

Ce mode de mise en œuvre de l'invention permet une sécurité accrue. En effet, l'identifiant généré comprend deux identifiants différents de l'utilisateur et permet ainsi une double vérification de l'utilisateur.

L'invention concerne également un procédé de gestion d'au moins une preuve d'achat électronique mis en œuvre par un dispositif de gestion et caractérisé en ce qu'il comprend :
- une première étape de réception, en provenance d'un dispositif d'encaissement, d'au moins un identifiant d'au moins un utilisateur et d'au moins une preuve d'achat, ladite au moins une preuve d'achat et ledit au moins un identifiant étant émis à la suite d'un paiement électronique réalisé par ledit au moins un utilisateur ;
- une étape d'obtention d'au moins une adresse électronique dudit au moins un utilisateur obtenue en fonction dudit au moins un identifiant reçu ;
- une première étape d'émission de ladite au moins une preuve d'achat à destination de ladite au moins une adresse électronique obtenue.

Ce mode de réalisation permet d'émettre une preuve d'achat à destination d'un utilisateur qui finalise un paiement électronique chez un marchand, par exemple dans le cas particulier où le procédé de gestion est exécuté par un dispositif de gestion opéré par la banque de l'utilisateur.

Concrètement, lorsqu'un utilisateur finalise un paiement, par exemple au moyen d'une carte bancaire, le procédé de gestion reçoit depuis un dispositif de traitement, via par exemple un dispositif d'encaissement du marchand, un identifiant de l'utilisateur. Cet identifiant comprend une empreinte numérique réalisée via l'application d'une fonction cryptographique sur le PAN. Le procédé de gestion reçoit également depuis le dispositif d'encaissement une preuve d'achat en lien avec le paiement réalisé par l'utilisateur.

Le procédé obtient ensuite, par exemple depuis un espace de stockage numérique tel qu'une base de données ou un fichier, une adresse électronique de l'utilisateur en réponse à une requête comprenant dans ses paramètres l'empreinte numérique. Bien entendu, la banque de l'utilisateur a la connaissance du PAN de l'utilisateur et de la fonction cryptographique qui a permis la génération de l'empreinte numérique au niveau du dispositif de traitement. Par conséquent, celle-ci est apte à générer la même empreinte numérique et à renseigner au préalable l'espace de stockage numérique avec le couple « adresse électronique de l'utilisateur » / « empreinte numérique du PAN de l'utilisateur ». A noter que l'adresse électronique est par exemple récupérée depuis l'espace client de la banque de l'utilisateur. Une fois l'adresse électronique de l'utilisateur obtenue, le procédé émet à destination de l'utilisateur une preuve d'achat en lien avec le paiement réalisé.

Selon un mode de mise en œuvre particulier de l'invention, un procédé tel que décrit ci-dessus est caractérisé en ce que l'étape d'obtention comprend une deuxième étape d'émission d'une requête à destination d'au moins un destinataire déterminé en fonction dudit au moins un identifiant reçu, ladite requête comprenant au moins ledit identifiant reçu, et une étape de réception, en réponse à ladite requête, d'au moins une adresse électronique. Ce mode de réalisation permet, dans le cas particulier où le procédé de gestion est exécuté par un tiers indépendant de la banque de l'utilisateur, d'émettre une preuve d'achat à destination de l'utilisateur. Pour cela, le procédé détermine la banque émettrice du moyen de paiement grâce à l'identifiant reçu qui comprend par exemple une séquence de huit chiffres correspondant aux huit premiers chiffres du PAN de la carte bancaire utilisée par l'utilisateur pour le paiement. En effet, les huit premiers chiffres du PAN de la carte bancaire permettent de déterminer l'organisme émetteur de la carte bancaire, c'est-à-dire la banque de l'utilisateur. Une fois la banque connue, le procédé obtient, par exemple depuis un espace de stockage numérique, une adresse électronique (URL, adresse de courriel, etc.) de la banque puis lui envoie l'identifiant reçu. La banque, grâce à l'identifiant reçu qui comprend une l'empreinte numérique du PAN de la carte bancaire utilisée par l'utilisateur lors du paiement, obtient une adresse électronique de l'utilisateur. Cette adresse électronique est par exemple obtenue depuis un espace de stockage numérique tel qu'une base de données ou un fichier. En réponse à la requête, la banque envoie l'adresse électronique de l'utilisateur obtenue, si bien sûr l'utilisateur l'y a autorisé. Le procédé émet ensuite à destination de l'adresse électronique de l'utilisateur une preuve d'achat en lien avec le paiement réalisé par l'utilisateur.

On entend par adresse électronique une chaîne de caractères qui permet d'identifier une boite aux lettres informatique ou un compte d'un réseau social permettant au titulaire du compte ou de la boite aux lettres informatique d'obtenir des messages (courriels, messages instantanés conformes par exemple au standard RCS (Rich Communication Suite), SMS (Short Message Service), ou tout autre message texte, audio ou vidéo).

L'invention concerne également un dispositif de transmission caractérisé en ce qu'il comprend :
- un module d'obtention d'au moins un premier identifiant dudit au moins un utilisateur depuis au moins un moyen de paiement électronique dudit au moins un utilisateur, ledit au moins un premier identifiant étant utilisé pour ledit paiement électronique ;
- un module de génération dudit au moins un second identifiant dudit utilisateur, ledit second identifiant comprenant au moins une empreinte numérique dudit au moins un premier identifiant et une partie dudit au moins un premier identifiant ;
- un module de transmission dudit au moins un second identifiant à destination d'un dispositif de gestion d'au moins une preuve d'achat électronique.

L'invention concerne également un dispositif de gestion caractérisé en ce qu'il comprend :
- un module de réception, en provenance d'un dispositif d'encaissement, d'au moins un identifiant d'au moins un utilisateur et d'au moins une preuve d'achat, ladite au moins une preuve d'achat et ledit au moins un identifiant étant émis à la suite d'un paiement électronique réalisé par ledit au moins un utilisateur ;
- un module d'obtention d'au moins une adresse électronique dudit au moins un utilisateur obtenue en fonction dudit au moins un identifiant reçu ;
- un module d'émission de ladite au moins une preuve d'achat à destination de ladite au moins une adresse électronique obtenue.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

L'invention concerne également un terminal de paiement électronique caractérisé en ce qu'il comporte un dispositif de transmission.

L'invention concerne également un programme d'ordinateur comportant des instructions pour la mise en œuvre des procédés ci-dessus selon l'un quelconque des modes particuliers de réalisation décrits précédemment, lorsque ledit programme est exécuté par un processeur. Les procédés peuvent être mis en œuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question. Ces dispositifs de transmission, de gestion et ce programme d'ordinateur présentent des caractéristiques et avantages analogues à ceux décrits précédemment en relation avec le procédé de de transmission et de gestion.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en œuvre selon un mode particulier de réalisation de l'invention ;
[Fig 2] La figure 2 illustre l'architecture matérielle d'un dispositif configuré pour mettre en œuvre le procédé de transmission selon un mode particulier de réalisation de l'invention ;
[Fig 3] La figure 3 illustre l'architecture matérielle d'un dispositif configuré pour mettre en œuvre le procédé de gestion selon un mode particulier de réalisation de l'invention ;
[Fig 4] La figure 4 illustre des étapes des procédés de transmission et de gestion selon un mode particulier de réalisation de l'invention.

### 5. Description d'un mode de réalisation de l'invention

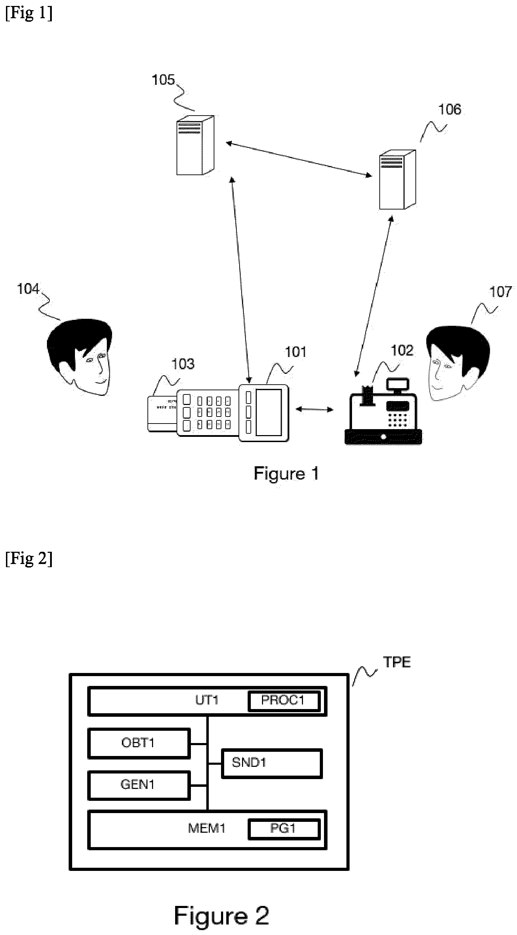

La figure 1 illustre un exemple d'environnement de mise en œuvre de l'invention selon un mode particulier de réalisation de l'invention. L'environnement représenté à l'appui de la figure 1 comprend un terminal de paiement électronique 101 (TPE) qui exécute le procédé de transmission, un dispositif d'encaissement 102, un serveur bancaire 105 et un serveur d'applications 106 qui exécute le procédé de gestion. La figure 1 représente également un moyen de paiement électronique 103 appartenant à un utilisateur 104. Le moyen de paiement représenté ici est une carte bancaire mais l'invention s'applique à tout moyen de paiement électronique (numéro de carte bancaire virtuelle, terminal mobile comprenant un élément sécurisé (« secure element » en anglais), code barre, adresse de messagerie, etc.). Le terminal de paiement 101 et le serveur bancaire 105, le terminal de paiement 101 et le dispositif d'encaissement 102, le dispositif d'encaissement 102 et le serveur d'applications 106, le serveur d'applications 106 et le serveur bancaire 105 peuvent être connectés entre eux via un ou plusieurs réseaux de communication. Les réseaux de communication utilisés sont par exemple des réseaux de communication publics de type Internet ou bien privés. Ces réseaux de communication peuvent être accessibles via un réseau d'accès (non représenté) tel qu'un réseau filaire, sans fil (WiFi, Bluetooth, etc.) ou un réseau de données cellulaires de type 2G, 3G, 4G ou 5G.

Lorsqu'une transaction bancaire est réalisée entre le client (104) et le commerçant (107), un identifiant du client comprenant un partie chiffrée par le terminal de paiement électronique est transmis au dispositif d'encaissement (102). Cet identifiant ainsi qu'une preuve d'achat générée par le dispositif d'encaissement (102) sont ensuite émis par celui-ci à destination du serveur d'applications 106. En fonction de l'identifiant reçu, le serveur d'applications 106 obtient une adresse numérique du client 103. La preuve d'achat est ensuite émise par le serveur d'applications 106 à destination de l'adresse électronique obtenue.

De façon connue, le terminal de paiement 101 peut, lors de la transaction, réaliser une demande d'autorisation auprès du serveur bancaire 105 afin d'obtenir ou non une validation du paiement.

Selon un mode particulier de réalisation de l'invention, le serveur 106 et le dispositif d'encaissement 102 peuvent être un seul et même dispositif.

Selon un mode particulier de réalisation de l'invention, le terminal de paiement 101 peut comprendre le dispositif d'encaissement 102. Dans ce cas de figure, la réception de l'identifiant de l'utilisateur par le dispositif d'encaissement 102 se fera via des messages internes au terminal 101. Ce même terminal peut également être compris au sein d'un ordinateur ou tout autre dispositif ayant l'architecture d'un ordinateur tel qu'un smartphone (téléphone intelligent en anglais), une tablette, un assistant vocal, etc. permettant ainsi de réaliser des achats en ligne. Concrètement, l'utilisateur peut, par exemple, saisir des informations présentes sur sa carte bancaire (PAN, CW, date d'expiration) au niveau d'une interface graphique affichée par un navigateur internet pour procéder au paiement.

Selon un mode particulier de réalisation de l'invention, les serveurs 105 et 106 peuvent être un seul et même serveur.

Selon un mode particulier de réalisation de l'invention le paiement peut faire intervenir une pluralité de moyens de paiement et une pluralité d'utilisateurs (paiement partagé entre plusieurs personnes).

Selon un mode particulier de réalisation de l'invention, l'ensemble des messages échangés entre le terminal de paiement 101 et le serveur bancaire 105, le terminal de paiement 101 et le dispositif d'encaissement 102, d'encaissement 102 et le serveur d'applications 106 et entre le serveur d'applications 106 et le serveur bancaire 105 peuvent être des messages cryptés / chiffrés via par exemple des mécanismes de chiffrement à clef privée/publique.

Selon un mode particulier de réalisation de l'invention, l'environnement peut comprendre une pluralité de TPE 101 connectés au dispositif d'encaissement 102.

Selon un mode particulier de réalisation de l'invention, l'environnement peut comprendre une pluralité de TPE 101 connectés au serveur bancaire 105.

Selon un mode particulier de réalisation de l'invention, l'environnement peut comprendre une pluralité de dispositifs d'encaissement 102 connectés au serveur d'applications 106

Selon un mode particulier de réalisation de l'invention, l'environnement peut comprendre une pluralité de serveurs bancaires 105 connectés au serveur d'applications 106.

Selon un mode particulier de réalisation de l'invention, l'environnement peut comprendre une pluralité de serveurs d'applications 106 connectés au serveur bancaires 105.

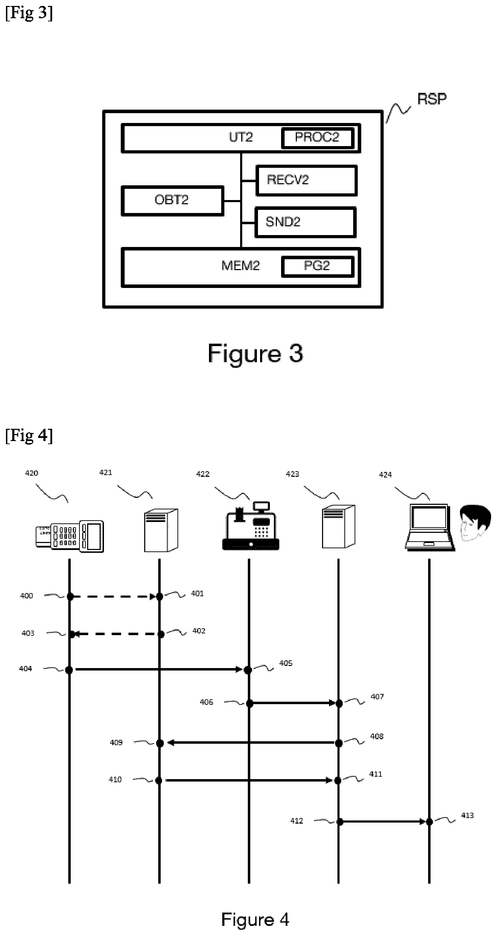

La figure 2 illustre un dispositif TPE mettant en œuvre l'invention selon un mode particulier de réalisation. Le dispositif TPE a l'architecture classique d'un ordinateur, et comprend notamment une mémoire MEM1, une unité de traitement UT1, équipée par exemple d'un processeur PROC1, et pilotée par le programme d'ordinateur PG1 stocké en mémoire MEM1. Le programme d'ordinateur PG1 comprend des instructions pour mettre en œuvre les étapes du procédé de transmission tel que décrit ultérieurement à l'appui de la figure 4, lorsque le programme est exécuté par le processeur PROC1.

A l'initialisation, les instructions de code du programme d'ordinateur PG1 sont par exemple chargées dans une mémoire avant d'être exécutées par le processeur PROC1. Le processeur PROC1 de l'unité de traitement UT1 met notamment en œuvre les étapes du procédé d'enrichissement selon l'un quelconque des modes particuliers de réalisation décrits en relation avec les figures 1 et 4, selon les instructions du programme d'ordinateur PG1.

Le dispositif TPE comprend également un module d'obtention OBT1 apte à obtenir un identifiant d'un utilisateur qui a finalisé un paiement chez un marchand. Cet identifiant est par exemple obtenu depuis le moyen de paiement électronique utilisé par l'utilisateur lors du paiement. Le dispositif TPE comprend en outre un module de génération GEN1 apte à générer un nouvel identifiant de l'utilisateur en fonction de l'identifiant obtenu via le module OBT1. Ce module peut réaliser par exemple :
- des opérations de chiffrage de tout ou partie de l'identifiant obtenu (empreinte numérique) ;
- des opérations d'assemblage / concaténation de parties (chiffrées ou non) de l'identifiant obtenu ;
- des opérations d'ajout de chaînes de caractères à l'identifiant obtenu telles qu'un préfixe, un suffixe ou nouvel identifiant ;
- des opérations de suppression d'une partie de l'identifiant ;
- ou toute autre opération de manipulation de la chaîne de caractères représentant l'identifiant obtenu.

Le dispositif TPE comprend de plus un module de transmission / d'émission SND1 apte à émettre des messages via par exemple un réseau IP. Le module d'émission SND1 est par exemple utilisé pour émettre à destination d'un dispositif de gestion l'identifiant généré par le module GEN1.

La figure 3 illustre un dispositif RSP mettant en œuvre l'invention selon un mode particulier de réalisation. Le dispositif RSP a l'architecture classique d'un ordinateur, et comprend notamment une mémoire MEM2, une unité de traitement UT2, équipée par exemple d'un processeur PROC2, et pilotée par le programme d'ordinateur PG2 stocké en mémoire MEM2. Le programme d'ordinateur PG2 comprend des instructions pour mettre en œuvre les étapes du procédé de transmission tel que décrit ultérieurement à l'appui de la figure 4, lorsque le programme est exécuté par le processeur PROC2.

A l'initialisation, les instructions de code du programme d'ordinateur PG2 sont par exemple chargées dans une mémoire avant d'être exécutées par le processeur PROC2. Le processeur PROC2 de l'unité de traitement UT2 met notamment en œuvre les étapes du procédé de gestion selon l'un quelconque des modes particuliers de réalisation décrits en relation avec

les figures 1 et 4, selon les instructions du programme d'ordinateur PG2.

Le dispositif RSP comprend également un module de communication RECV2 configuré pour recevoir, par exemple via un réseau IP, un identifiant d'un utilisateur en provenance d'un dispositif d'encaissement lorsque l'utilisateur a finalisé un paiement chez un marchand.

Le dispositif RSP comprend en outre un module d'obtention OBT2 apte à obtenir, en fonction de l'identifiant reçu par le module RECV2, une adresse électronique de l'utilisateur. De plus, le dispositif RSP comprend un module SND2 apte à émettre un message comprenant une preuve d'achat à destination de l'adresse électronique obtenue par le module OBT2.

Selon un mode particulier de réalisation de l'invention, les modules RECV2 et SND2 sont un seul et même module de communication.

Selon un mode particulier de réalisation de l'invention, le module RECV2 est également apte à recevoir un message comprenant une adresse électronique de l'utilisateur en réponse à une requête émise par le module SND2 à destination par exemple d'un serveur bancaire et comprenant l'identifiant reçu par le module RECV2.

La figure 4 illustre des étapes des procédés de transmission et de gestion selon un mode particulier de réalisation de l'invention et décrit le cas particulier d'une transaction électronique en lien avec l'environnement de la figure 1.

Lors de l'étape 404 un utilisateur (i.e. un client) utilise un moyen de paiement électronique chez un commerçant pour effectuer un achat. Pour ce faire, il insère une carte bancaire dans un Terminal de Paiement Electronique (TPE) 420 (101 de la figure 1) et saisit son code confidentiel pour valider la transaction. Si le code saisi est valide, alors le TPE génère un identifiant de l'utilisateur sur la base d'un identifiant obtenu depuis la carte bancaire. L'identifiant obtenu est par exemple le PAN de la carte bancaire.

Concrètement, lors du paiement, le TPE recueille le numéro PAN complet de la carte bancaire de l'utilisateur constitué d'une partie IIN (Issuer Identification Number) qui correspond aux chiffres permettant d'identifier la banque émettrice de la carte bancaire et d'un numéro identifiant l'utilisateur. Le TPE génère alors une empreinte numérique HPAN sur tout ou partie du PAN, grâce à une fonction cryptographique dont il est pourvu.

Le TPE transmet ensuite un identifiant qui comprend la partie IIN et le HPAN au système de caisse (422). A noter que la génération d'un identifiant sur la base du PAN permet de respecter les règles de sécurité en vigueur qui interdisent la transmission du PAN au-delà du TPE (en particulier, lorsque le TPE est relié à un système de caisse).

Alternativement, le procédé transmet séparément dans un même message ou dans des messages différents le IIN et le HPAN au système de caisse (422).

Le système de caisse (422) reçoit l'identifiant lors de l'étape 405 et élabore le ticket de caisse numérique. Le système de caisse (422) transfère ensuite (étape 406) le ticket de caisse numérique et l'identifiant reçu au serveur d'applications 423.

Lors de l'étape 407, le serveur d'applications 423 est en mesure de déterminer quelle est la banque émettrice de la carte bancaire de l'utilisateur grâce notamment à l'identifiant reçu et plus précisément à la partie IIN. Une fois la banque émettrice de la carte bancaire déterminée, le serveur d'applications 423 émet une requête (étape 408) comprenant l'information HPAN à destination d'un serveur de la banque 421. Lors de l'étape 410, le serveur bancaire 421 transmet au serveur d'applications 423, en réponse à la requête reçue (étape 409), une adresse électronique de l'utilisateur. En effet, la banque dispose en interne d'une table de correspondance qui lui permet de retrouver une adresse électronique d'un client en fonction d'une information de type HPAN. Bien entendu, cette table a été constituée en utilisant la même fonction cryptographique qui a été mise en œuvre par le TPE pour générer le HPAN. A l'étape 411 le serveur d'applications 423 reçoit l'adresse électronique de l'utilisateur depuis le serveur bancaire 421 puis émet le ticket de caisse numérique reçu à l'étape 407 à destination de l'adresse électronique de l'utilisateur (étape 412).

Selon un mode particulier de réalisation de l'invention, le serveur bancaire 421 peut conditionner la transmission de l'adresse électronique de l'utilisateur à des droits attribués au serveur d'applications 423.

Selon un mode particulier de réalisation de l'invention, le serveur bancaire 421 peut conditionner la transmission de l'adresse électronique de l'utilisateur à une validation de la part du client. Cette validation peut être permanente, via par exemple le positionnement d'un paramètre du compte utilisateur du client à une valeur particulière, ou à la demande (pour chaque transaction).

Selon un mode particulier de réalisation de l'invention, les serveurs 421 et 423 sont un seul et même serveur.

Selon un mode particulier de réalisation de l'invention, le TPE peut communiquer avec la banque du client avant la finalisation du paiement. Cette communication (étape 400 à 403), par exemple requise pour un paiement via une carte bancaire demandant une autorisation bancaire systématique, peut permettre au TPE d'obtenir du serveur bancaire 421 un identifiant temporaire à usage unique de l'utilisateur (Hid).

Alternativement le serveur bancaire qui fournit l'identifiant temporaire unique de l'utilisateur au TPE peut être un deuxième serveur bancaire, autre que le serveur bancaire 421.

Le TPE transmet ensuite le IIN et le Hid au système de caisse lors de l'étape 404. Le système de caisse élabore ensuite (étape 406) le ticket de caisse numérique qu'il transfère avec le IIN et le Hid au serveur d'applications 423. Lors de l'étape 407, le serveur d'applications 423 est en mesure de déterminer quelle est la banque émettrice de la carte bancaire de l'utilisateur grâce notamment au IIN. Une fois la banque émettrice de la carte bancaire déterminée, le serveur d'applications 423 émet une requête (étape 408) comprenant l'information Hid à destination du serveur bancaire 421 de la banque de l'utilisateur.

La banque peut vérifier en premier lieu que le serveur d'applications 423 est bien autorisé à réaliser une telle requête puis transmet au serveur d'applications 423 (étape 410), en réponse à la requête, une adresse électronique de l'utilisateur. En effet, la banque dispose en interne d'une table de correspondance qui lui permet de retrouver une adresse électronique d'un client en fonction de l'information Hid. A l'étape 411, le serveur d'applications 423 reçoit l'adresse électronique de l'utilisateur depuis le serveur bancaire 421 puis émet le ticket de caisse numérique reçu à l'étape 407 à destination de l'adresse électronique de l'utilisateur (étape 412).

Selon un mode particulier de réalisation de l'invention, le ticket de caisse numérique élaboré par le système de caisse peut être complété ou remplacé par un contenu (un courriel, une URL/URI, etc.) permettant la fourniture d'informations telles qu'un accès à un service numérique fourni par le commerçant (promotions, offres, etc.).

Selon un mode particulier de réalisation de l'invention, le moyen de paiement de l'utilisateur peut correspondre à une chaine de caractères telle qu'un numéro, une référence / un code ou une adresse de courriel comprenant au moins un identifiant de la banque de l'utilisateur et un identifiant de l'utilisateur. A noter que la chaine de caractères peut être codée sous forme de code-barres.

Selon un mode particulier de réalisation de l'invention, le moyen de paiement de l'utilisateur peut correspondre à l'identifiant de l'utilisateur obtenu lors de l'étape 404. Par exemple, si l'utilisateur effectue le paiement via la saisie sur le TPE d'une adresse électronique fournie par sa banque, par exemple au format : « userid@bank.com », le TPE génère alors une empreinte numérique Hid sur la partie locale de l'adresse électronique (le « userid »). Le TPE transmet ensuite au système de caisse 422 le nom de domaine « bank.com » et l'empreinte numérique Hid (étape 404). Le système de caisse élabore (étape 406) le ticket de caisse numérique qu'il transfère avec l'empreinte numérique Hid et le nom de domaine au serveur d'applications 423. Lors de l'étape 407, le serveur d'applications 423 est en mesure de déterminer quelle est la banque de l'utilisateur grâce notamment au nom de domaine. Les étapes 408 à 413 restent ensuite identiques.

Selon un mode particulier de réalisation de l'invention, le moyen de paiement de l'utilisateur peut correspondre à un couple d'identifiants de l'utilisateur obtenu lors de l'étape 404. Par exemple un identifiant de établissement bancaire de l'utilisateur et une représentation numérique d'une caractéristique biométrique (empreinte digital, voix, visage, etc.). A noter que l'identifiant de établissement bancaire peut être renseigné par l'utilisateur au niveau du TPE via une interface de saisie ou une interface vocale.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé de transmission, lors d'un paiement électronique réalisé par au moins un utilisateur, d'au moins un second identifiant dudit au moins un utilisateur, ledit procédé étant mis en œuvre par un dispositif de transmission et **caractérisé en ce qu'**il comprend :
- une étape d'obtention (404) d'au moins un premier identifiant (PAN) dudit au moins un utilisateur depuis au moins un moyen de paiement électronique dudit au moins un utilisateur, ledit au moins un premier identifiant étant utilisé pour ledit paiement électronique ;
- une étape de génération (404) dudit au moins un second identifiant dudit utilisateur, ledit second identifiant comprenant au moins une donnée et une partie dudit au moins un premier identifiant ;
et lorsque ledit paiement électronique est finalisé
- une étape de transmission (404) dudit au moins un second identifiant à destination d'un dispositif de gestion d'au moins une preuve d'achat électronique.

2. Procédé selon la revendication 1 dans lequel ladite au moins une donnée comprend au moins une empreinte numérique (HPAN) dudit au moins un premier identifiant (PAN).

3. Procédé selon la revendication 1 dans lequel ladite au moins une donnée comprend un troisième identifiant (Hid) obtenu depuis un serveur bancaire (421).

4. Procédé selon la revendication 1 dans lequel ladite au moins une donnée comprend un troisième identifiant (Hid) obtenu depuis un serveur bancaire (421) et une empreinte numérique (HPAN) dudit au moins un premier identifiant (PAN).

5. procédé de gestion d'au moins une preuve d'achat électronique mis en œuvre par un dispositif de gestion et **caractérisé en ce qu'**il comprend :
- une première étape de réception (407), en provenance d'un dispositif d'encaissement, d'au moins un identifiant d'au moins un utilisateur et d'au moins une preuve d'achat, ladite au moins une preuve d'achat et ledit au moins un identifiant étant émis à la suite d'un paiement électronique réalisé par ledit au moins un utilisateur ;
- une étape d'obtention (411) d'au moins une adresse électronique dudit au moins un utilisateur obtenue en fonction dudit au moins un identifiant reçu ;
- une première étape d'émission (412) de ladite au moins une preuve d'achat à destination de ladite au moins une adresse électronique obtenue.

6. Procédé selon la revendication 5 dans lequel l'étape d'obtention comprend une deuxième étape d'émission (408) d'une requête à destination d'au moins un destinataire déterminé en fonction dudit au moins un identifiant reçu, ladite requête comprenant au moins ledit identifiant reçu, et une étape de réception (411), en réponse à ladite requête, d'au moins une adresse électronique.

7. Dispositif de transmission **caractérisé en ce qu'**il comprend :
- un module d'obtention (OBT1) d'au moins un premier identifiant dudit au moins un utilisateur depuis au moins un moyen de paiement électronique dudit au moins un utilisateur, ledit au moins un premier identifiant étant utilisé pour ledit paiement électronique ;
- un module de génération (GEN1) dudit au moins un second identifiant dudit utilisateur, ledit second identifiant comprenant au moins une empreinte numérique dudit au moins un premier identifiant et une partie dudit au moins un premier identifiant ;
- un module de transmission (SND1) dudit au moins un second identifiant à destination d'un dispositif de gestion d'au moins une preuve d'achat électronique.

8. Dispositif de gestion **caractérisé en ce qu'**il comprend :
- un module de réception (RECV2), en provenance d'un dispositif d'encaissement, d'au moins un identifiant d'au moins un utilisateur et d'au moins une preuve d'achat, ladite au moins une preuve d'achat et ledit au moins un identifiant étant émis à la suite d'un paiement électronique réalisé par ledit au moins un utilisateur ;
- un module d'obtention (OBT2) d'au moins une adresse électronique dudit au moins un utilisateur obtenue en fonction dudit au moins un identifiant reçu ;
- un module d'émission (SND2) de ladite au moins une preuve d'achat à destination de ladite au moins une adresse électronique obtenue.

9. Terminal de paiement électronique **caractérisé en ce qu'**il comporte un dispositif de transmission.

10. Programme d'ordinateur comportant des instructions pour la mise en œuvre des procédés selon l'une quelconque des revendications 1 à 4 et 5 à 6, lorsque le programme est exécuté par un processeur.
